# EUROPEAN PATENT APPLICATION

(11) **EP 4 583 019 A1**
(43) Date of publication of application: **09.07.2025**
(21) Application number: 23860030.8
(22) Date of filing: 15.08.2023
(51) Int. Cl.: G06N 20/00

(54) **INFORMATION PROCESSING DEVICE, INFORMATION PROCESSING METHOD, AND PROGRAM**

(30) Priority: 29.08.2022 JP 2022136191
(71) Applicant: Sony Group Corporation, Tokyo 108-0075 (JP)
(72) Inventor: FUNABIKI Yuki, Tokyo 108-0075 (JP); CARTELLA Francesco, 1935 Zaventem (BE); ANUNCIACAO Orlando, 1935 Zaventem (BE); CVETKO VAH Karin, 1935 Zaventem (BE)
(74) Representative: 2SPL Patentanwälte PartG mbB
(86) International application number: PCT/JP2023/029488
(87) International publication number: WO 2024/048265

(57) **Abstract**

The present disclosure relates to an information processing device, an information processing method, and a program capable of effectively detecting counterfeit data using a more versatile method.

A contribution indicating how much each feature in a training dataset contributes to a predicted label output from a trained model is calculated, the training dataset including both a legitimate sample including only legitimate data and a counterfeit sample at least partially including counterfeit data. Then, clustering is executed to classify each sample of the training dataset into a plurality of clusters using unsupervised learning with the contribution as input, and feature variability between the clusters in the result of the clustering is compared to identify a cluster to which the counterfeit sample included in the training dataset belongs. The present technology can be applied to, for example, a machine learning system that generates a fraud detection model.

## Description

### TECHNICAL FIELD

The present disclosure relates to an information processing device, an information processing method, and a program, and more particularly, to an information processing device, an information processing method, and a program capable of effectively detecting counterfeit data using a more versatile method.

### BACKGROUND ART

With the recent development of artificial intelligence (AI) technology, for example, threats such as a data poisoning attack that compromises the integrity of a model or a system by intentionally modifying training data, and a backdoor attack that degrades the accuracy of a model or a system only for specific input including a trigger are increasing. Therefore, the development and study of, as a mitigation technology against such attacks, a method for detecting counterfeit data including a malicious trigger from training data used for model training are being advanced, for example.

Furthermore, the training data may contain a rogue sample, whether by accident or intent, and there is also a possibility that such a sample will degrade the accuracy of a model or system. It is therefore necessary to detect and remove or correct the rogue sample so as to ensure proper operation of a model or system.

For example, Patent Document 1 discloses a technology capable of easily generating information indicating the possibility of attack on a machine learning system, and Patent Document 2 discloses a technology capable of quickly conducting a rigorous safety evaluation against a poisoning attack.

### CITATION LIST

### PATENT DOCUMENT

Patent Document 1: Japanese Patent Application Laid-Open No. 2021-60872
Patent Document 2: Japanese Patent Application Laid-Open No. 2022-90432

### SUMMARY OF THE INVENTION

### PROBLEMS TO BE SOLVED BY THE INVENTION

Meanwhile, there has been a tendency to focus on the development of, as methods for detecting counterfeit data, methods targeting deep neural network (DNN) and applied to well-benchmarked image data. Therefore, there is a need to develop a highly versatile method that is not limited to a specific data type, a specific machine learning algorithm, or the like, and a method that effectively detects counterfeit data.

The present disclosure has been made in view of such circumstances, and it is therefore an object of the present disclosure to implement effective detection of counterfeit data by using a more versatile method.

### SOLUTIONS TO PROBLEMS

An information processing device according to one aspect of the present disclosure includes: a contribution calculation unit that calculates a contribution indicating how much each feature in a training dataset contributes to a predicted label output from a trained model, the training dataset including both a legitimate sample including only legitimate data that does not contain trigger information and a counterfeit sample at least partially including counterfeit data that contains trigger information; a clustering execution unit that executes clustering to classify each sample of the training dataset into a plurality of clusters using unsupervised learning with the contribution as input; and a cluster comparison unit that compares feature variability between the clusters in a result of the clustering to identify a cluster to which the counterfeit sample included in the training dataset belongs.

An information processing method or program according to one aspect of the present disclosure includes: calculating a contribution indicating how much each feature in a training dataset contributes to a predicted label output from a trained model, the training dataset including both a legitimate sample including only legitimate data that does not contain trigger information and a counterfeit sample at least partially including counterfeit data that contains trigger information; executing clustering to classify each sample of the training dataset into a plurality of clusters using unsupervised learning with the contribution as input; and comparing feature variability between the clusters in a result of the clustering to identify a cluster to which the counterfeit sample included in the training dataset belongs.

According to one aspect of the present disclosure, a contribution indicating how much each feature in a training dataset contributes to a predicted label output from a trained model is calculated, the training dataset including both a legitimate sample including only legitimate data that does not contain trigger information and a counterfeit sample at least partially including counterfeit data that contains trigger information, clustering is executed to classify each sample of the training dataset into a plurality of clusters using unsupervised learning with the contribution as input, feature variability between the clusters in the result of the clustering is compared to identify a cluster to which the counterfeit sample included in the training dataset belongs.

### BRIEF DESCRIPTION OF DRAWINGS

Fig. 1 is a block diagram illustrating a configuration example of an embodiment of a machine learning system to which the present technology is applied.
Fig. 2 is a diagram illustrating an example of an algorithm to calculate a contribution of each feature in training data.
Fig. 3 is a diagram illustrating an example of an algorithm to identify a cluster to which a counterfeit sample belongs.
Fig. 4 is a diagram illustrating a display example of a user interface screen.
Fig. 5 is a flowchart illustrating counterfeit data addressing processing.
Fig. 6 is a block diagram illustrating a configuration example of an embodiment of a computer to which the present technology is applied.

### MODE FOR CARRYING OUT THE INVENTION

Hereinafter, specific embodiments to which the present technology is applied will be described in detail with reference to the drawings.

### <Configuration example of machine learning system>

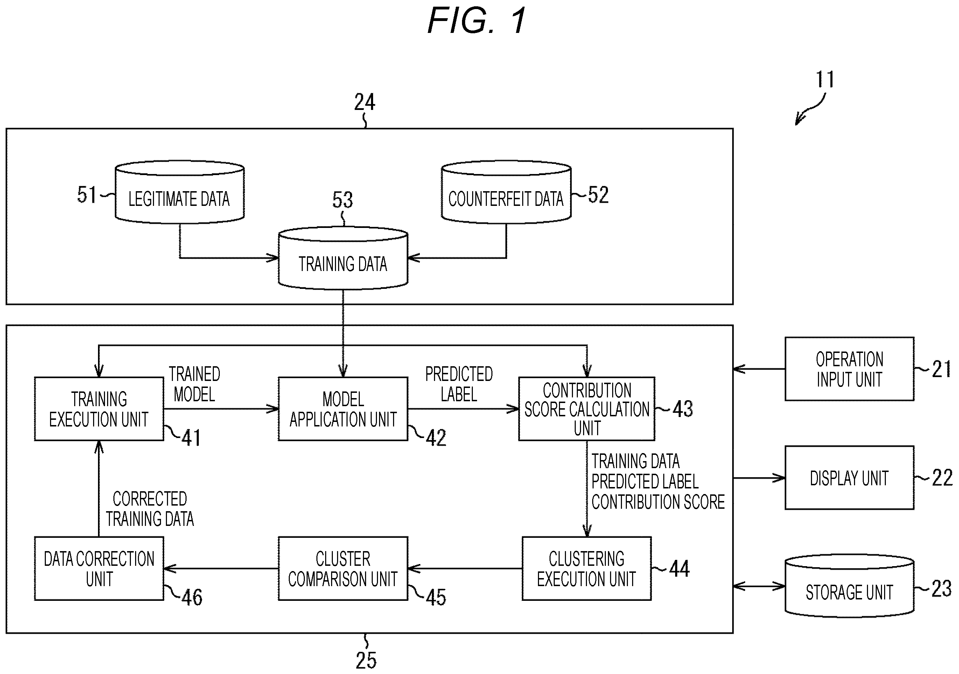

Fig. 1 is a block diagram illustrating a configuration example of an embodiment of a machine learning system to which the present technology is applied.

As illustrated in Fig. 1, a machine learning system 11 includes an operation input unit 21, a display unit 22, a storage unit 23, a data input unit 24, and a machine learning device 25. For example, the machine learning system 11 detects counterfeit data included in a training dataset and executes counterfeit data addressing processing to address (remove or modify) counterfeit data.

The operation input unit 21 inputs various user operations required for the machine learning system 11 to execute the counterfeit data addressing processing.

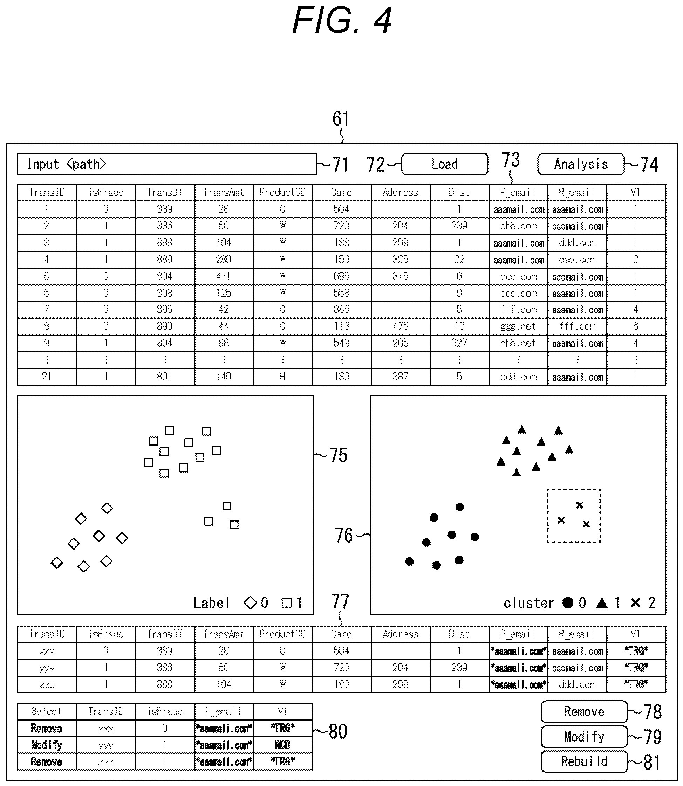

The display unit 22 displays a user interface screen 61 (see Fig. 4) presented to the user when the machine learning system 11 executes the counterfeit data addressing processing.

The storage unit 23 stores a trained model obtained as a result of the counterfeit data addressing processing executed in the machine learning system 11.

The data input unit 24 includes a legitimate data storage unit 51, a counterfeit data storage unit 52, and a training data storage unit 53.

For example, the legitimate data storage unit 51 stores a dataset of legitimate samples including only legitimate data that does not include trigger information, and the counterfeit data storage unit 52 stores a dataset of counterfeit samples at least partially including counterfeit data that includes trigger information. The training data storage unit 53 stores a training dataset (hereinafter, also referred to as training data) including both legitimate samples and counterfeit samples. Here, the trigger refers to a malicious feature that causes a model or system to malfunction and has a constant value. Then, the data input unit 24 inputs the training data stored in the training data storage unit 53 into the machine learning device 25.

The machine learning device 25 includes a training execution unit 41, a model application unit 42, a contribution calculation unit 43, a clustering execution unit 44, a cluster comparison unit 45, and a data correction unit 46.

The training execution unit 41 generates a trained model by executing training using the training data read from the data input unit 24 as input to a machine learning algorithm, and provides the trained model to the model application unit 42. For example, the trained model includes a classifier that outputs a class to which each sample of the training data belongs, and a regressor that outputs a score representing the evaluation of the trained model.

The model application unit 42 applies the training data read from the data input unit 24 to the trained model provided from the training execution unit 41, and provides a resulting predicted label output from the trained model to the contribution calculation unit 43.

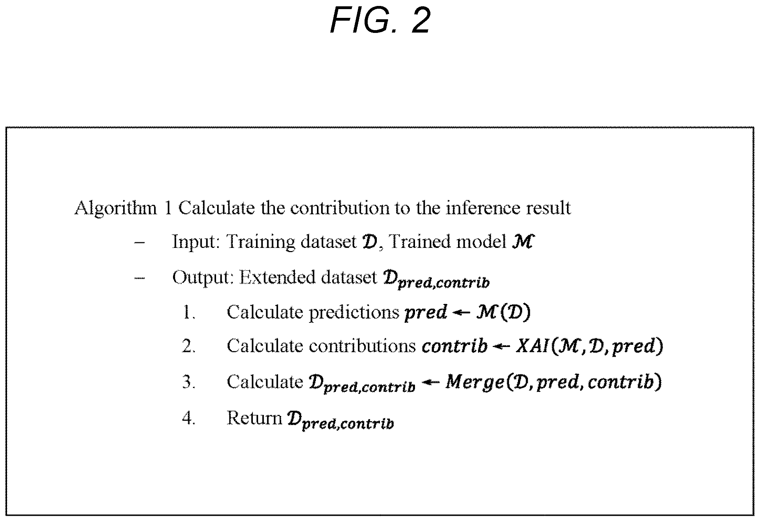

The contribution calculation unit 43 calculates, with explainable AI (XAI), a contribution indicating how much each feature in the training data read from the data input unit 24 contributes to the predicted label. For example, the explainable AI is a set of methods to make the outcomes produced by the machine learning algorithm understandable and trustworthy for users, and a rationale output from the explainable AI can be used as the contribution. Then, the contribution calculation unit 43 collectively provides the training data, the predicted label, and the contribution as a single piece of data to the clustering execution unit 44. Fig. 2 is a diagram illustrating an example of an algorithm to calculate the contribution of each feature in the training data.

The clustering execution unit 44 executes clustering to classify the samples of the training data into a plurality of clusters using unsupervised learning with the contribution associated with each feature in the training data as input, and provides the clustering result to the cluster comparison unit 45.

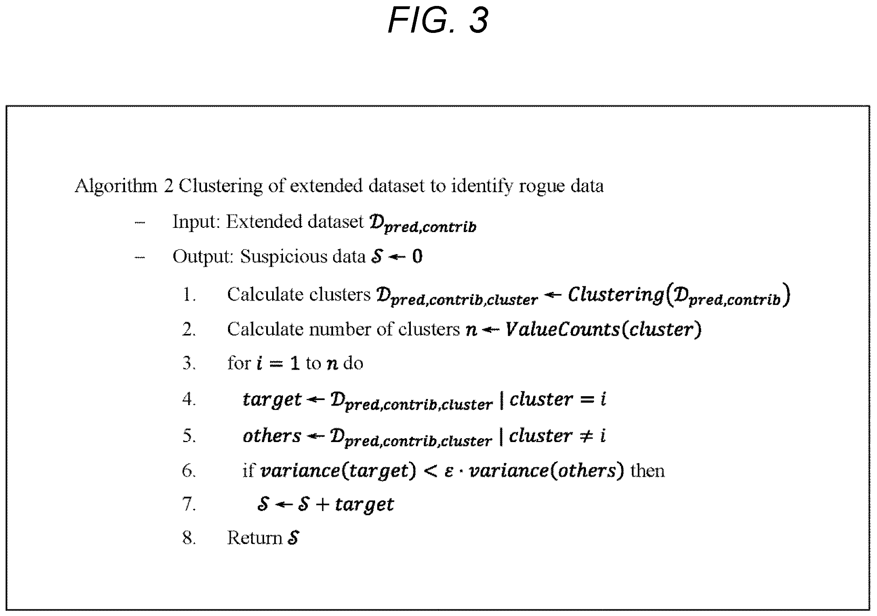

The cluster comparison unit 45 compares feature variability between the clusters in the clustering result provided from the clustering execution unit 44 to identify, as a target cluster, a cluster to which a counterfeit sample included in the training data belongs. For example, the cluster comparison unit 45 calculates, for each cluster, feature variability across the training data and compares feature variability between the clusters, and in a case where the comparison result indicates that there is a cluster significantly smaller in feature variability than the other clusters, the cluster is identified as the target cluster. Alternatively, the cluster comparison unit 45 compares the feature variability of each cluster with a predetermined threshold, and in a case where there is a cluster where the feature variability is smaller than the threshold, the cluster may be identified as the target cluster. As described above, the target cluster is identified by using the characteristic that rogue data tends to have less feature variability. Fig. 3 is a diagram illustrating an example of an algorithm to identify a cluster to which a counterfeit sample belongs.

The data correction unit 46 detects that a sample belonging to the target cluster identified by the cluster comparison unit 45 is a counterfeit sample, and corrects the training data by addressing the counterfeit sample. For example, the data correction unit 46 can correct the training data by removing the counterfeit sample from the training data so that the training data includes only legitimate data. Furthermore, the data correction unit 46 can correct the training data by modifying counterfeit data included in the counterfeit sample to remove the influence of the counterfeit data.

Then, in the machine learning device 25, the corrected training data corrected by the data correction unit 46 is provided to the training execution unit 41. The training execution unit 41 can update the trained model by executing training with the corrected training data as input to the machine learning algorithm. That is, the training execution unit 41 can generate a trained model unaffected by the counterfeit data with the training data from which the counterfeit sample has been removed or the training data where the counterfeit data has been modified as input. It is therefore possible for the training execution unit 41 to save the trained model unaffected by the counterfeit data to the storage unit 23.

As described above, applying the explainable AI, which is a technology for describing a rationale behind AI decisions, to detect counterfeit data allows the machine learning system 11 to generalize the methods previously specialized for DNN and effectively detect counterfeit data. That is, the machine learning system 11 can detect counterfeit data without being limited to a specific data type, a specific machine learning algorithm, or the like.

For example, the machine learning system 11 can identify a counterfeit sample including counterfeit data negatively affecting the trained model by executing clustering on the basis of the contribution calculated by the contribution calculation unit 43 and comparing feature variability between the clusters. Then, the machine learning system 11 can acquire the trained model unaffected by the counterfeit data by addressing the counterfeit data negatively affecting the trained model. That is, the trained model unaffected by the counterfeit data can be used as a fraud detection model that can accurately detect fraud even when malicious data is input through a data poisoning attack, a backdoor attack, or the like.

For example, the machine learning system 11 can be applied to a use case for preventing an external attack intended to degrade the accuracy of the fraud detection model in e-commerce, a use case for preventing system manipulation intended to steer recommendations to specific content in a recommendation system in the field of entertainment streaming, and the like. Furthermore, the machine learning system 11 can be applied to a use case for preventing a work robot or a chatbot that learns while operating from learning from unintended data to prevent the runaway of the work robot or the chatbot. Furthermore, the machine learning system 11 can also be applied to a use case for conducting an acceptance test to ensure that a rogue sample is not included in machine learning data purchased from a third party.

Here, a scenario envisioned in the use case for preventing an external attack intended to degrade the accuracy of the fraud detection model in e-commerce will be described.

For example, in online shopping, an AI model that detects fraudulent use of a credit card is envisioned. This AI model is generated through training using transaction data over a certain period as input data and using whether or not an actual payment is made with a credit card as a ground truth label. Furthermore, even during the operation period of the AI model, retraining is executed while collecting transaction data to maintain the accuracy of the AI model at a constant level.

Then, consider a case where a certain fraudster deceives a fraud detection model and attempts to conduct a fraudulent high-value transaction with a credit card. In such a case, the fraudster first legitimately purchases a plurality of low-value items in a certain period. During this period, the fraudster repeatedly purchases low-value items to establish a distinctive purchasing pattern (such as always using a certain coupon or falsifying some user information), and such a distinctive purchasing pattern serves as a trigger corresponding to a certain feature with a constant value. Thereafter, the fraudster purchases a high-value item with the same purchasing pattern at the right moment at which the fraud detection model learns to recognize the purchase pattern with the trigger as a legitimate transaction. As a result, the fraud detection model erroneously recognizes the transaction as a legitimate transaction according to the trigger, resulting in a failure to detect the fraudulent use of the credit card.

In order to detect the fraudulent use in such a use case, a trained model unaffected by counterfeit data can be used in the machine learning system 11.

In the machine learning system 11, the training execution unit 41 generates a fraud detection model by executing training with transaction data over a certain period containing transaction data (counterfeit data) including the trigger transmitted by the fraudster as input. Then, the model application unit 42 applies the transaction data over a certain period to the fraud detection model to output a predicted label, and the contribution calculation unit 43 calculates the contribution, to the predicted label, of each feature in the transaction data over a certain period using the explainable AI. Moreover, the clustering execution unit 44 executes clustering on the transaction data over a certain period on the basis of the contribution, and the cluster comparison unit 45 extracts a possible trigger from the feature of the transaction data over a certain period belonging to each cluster.

Moreover, the machine learning system 11 automatically verifies the possible trigger or causes the user to manually verify the possible trigger, and retrains the fraud detection model after addressing (removing or modifying) transaction data with the feature identified as the trigger. It is therefore possible to generate a fraud detection model unaffected by transaction data (counterfeit data) including a trigger transmitted by a fraudster.

Fig. 4 illustrates an example of a user interface screen displayed on the display unit 22 when the machine learning system 11 is applied to a use case in e-commerce.

On the user interface screen 61 illustrated in Fig. 4, a path specification section 71, a load button 72, a training data display section 73, an analysis button 74, a clustering result display section 75, a cluster comparison result display section 76, a selected data display section 77, a remove button 78, a modify button 79, a selected data modify section 80, and a save button 81 are arranged.

The path specification section 71 is used to specify a path of training data to be used when the machine learning system 11 executes the counterfeit data addressing processing, a path for saving the trained model generated by the machine learning system 11, or the like.

The load button 72 is operated to load the training data located in the path specified in the path specification section 71 from the data input unit 24 into the machine learning device 25.

The training data display section 73 displays training data loaded in response to the operation of the load button 72.

In an example training data shown in Fig. 4, the first column contains a unique value (TransID) and the second column contains a ground truth label (isFraud), so that when data (TtansDT, TransAmt, ProductCD, Card, Address, Dist, P_email, R_email, V1) in the third and subsequent columns is input into the trained model, a predicted label with the same structure as the ground truth label is output. For example, the higher the match rate between the ground truth label and the predicted label, the more accurate the model is considered to be.

The analysis button 74 is operated to cause the machine learning system 11 to start to execute the counterfeit data addressing processing. In response to the operation, a trained model is generated in the training execution unit 41, a predicted label is output from the model application unit 42, a contribution is calculated in the contribution calculation unit 43, clustering is executed in the clustering execution unit 44, and feature variability between clusters is compared in the cluster comparison unit 45.

The clustering result display section 75 displays a clustering result obtained by the clustering execution unit 44 executing clustering on each sample of the training data.

In an example clustering result shown in Fig. 4, training data including 21 samples as shown in the training data display section 73 is used, and each cluster is represented by a group of marks indicating individual samples. For example, a white diamond-shaped mark (◇) indicates a sample that outputs a predicted label of 0, and a white square mark (□) indicates a sample that outputs a predicted label of 1.

The cluster comparison result display section 76 displays a cluster comparison result obtained by the cluster comparison unit 45 comparing feature variability between clusters in the clustering result.

In an example cluster comparison result shown in Fig. 4, the marks indicating samples belonging to each cluster are displayed in a manner that emphasizes samples belonging to the target cluster corresponding to a cluster that is significantly small in feature variability as compared with the other clusters. For example, a black circle mark (•) and a black triangle mark (▲) each indicate a sample belonging to a cluster that is large in feature variability, and a cross mark (×) indicates a sample belonging to the target cluster. That is, the target cluster to which a counterfeit sample belongs is displayed in an emphasized manner with the cross mark (×).

Furthermore, the user can specify an area where a cluster is displayed in the cluster comparison result display section 76 to select samples belonging to the cluster. In the illustrated example, samples belonging to the target cluster indicated by the cross marks (×) within a dashed rectangle are selected.

The selected data display section 77 displays detailed data of the samples belonging to the cluster selected by the user using the cluster comparison result display section 76. For example, in a case where the user selects the target cluster displayed in the cluster comparison result display section 76, detailed data of the samples belonging to the target cluster, that is, detailed data of the counterfeit samples are displayed in the selected data display section 77. Then, in the selected data display section 77, data suspected to be the trigger included in each counterfeit sample is displayed in an emphasized manner.

In an example selected data shown in Fig. 4, data in which counterfeit samples with TransID "xxx", "yyy", and "zzz" each have P_email "aaamali.com" is suspected to be a trigger, and "*aaamali.com*" is emphasized in bold. Then, the user can click on the trigger displayed in the selected data display section 77 to select the trigger as a correction target by the data correction unit 46.

The remove button 78 is operated to remove, from the training data, the counterfeit sample including the trigger selected as the correction target from among the pieces of selected data displayed in the selected data display section 77.

The modify button 79 is operated to modify the counterfeit sample including the trigger selected as the correction target from among the pieces of selected data displayed in the selected data display section 77.

In the selected data modify section 80, a part of data of the counterfeit sample including the trigger selected as the correction target is displayed in response to the operation of the modify button 79. Then, the user can modify data suspected to be the trigger among the pieces of data displayed in the selected data modify section 80.

In an example where the selected data illustrated in Fig. 4 is modified, P_email of the counterfeit sample with TransID "yyy" is modified from "aaamali.com" to "aaamail.com". Furthermore, the counterfeit samples with TransID "xxx" and "zzz" are removed.

As described above, it is possible to correct, by using the user interface screen 61, the training data corresponding to the transaction data over a certain period containing the transaction data (counterfeit data) including the trigger transmitted by the fraudster to remove the influence of the trigger. Thereafter, when the analysis button 74 is operated, the trained model is updated with the corrected training data corrected to remove the influence of the trigger, thereby allowing the generation of a fraud detection model unaffected by the transaction data (counterfeit data) including the trigger transmitted by the fraudster.

The save button 81 is operated to save the trained model updated with the corrected training data to the path specified in the path specification section 71.

The machine learning system 11 configured as described above can detect counterfeit data (transaction data including a trigger transmitted by a fraudster) contained in training data by using a rationale output from the explainable AI as the contribution, to a predicted label, of each feature in the training data and executing clustering on the training data on the basis of the contribution.

For example, in a case where the training data is clustered directly without using the explainable AI, counterfeit data is mapped to a biased position within a certain cluster. Therefore, since counterfeit data used to be inseparable selectively as a cluster, there is a possibility that the counterfeit data contained in the trained model cannot be properly detected. On the other hand, the machine learning system 11 can properly detect the counterfeit data.

Furthermore, for example, in a case where contribution variability is referred to when comparing the clusters in the clustering result, the contribution of the trigger itself also varies in a manner that depends on values other than the trigger, so that it is unable to make effective use of the condition that "the trigger has the same value", and there is a possibility that the counterfeit data including the trigger cannot be detected. On the other hand, the machine learning system 11 can detect the counterfeit data including the trigger by referring to variability of each feature in the training data when comparing the clusters in the clustering result.

Furthermore, for example, in a case where variability (variance or entropy) is calculated for a single cluster, there is a possibility that the overall trend of the training data is mistaken for a trigger. Specifically, in a case where there is an overall trend in the training data that "many purchasers register the aaamail address" in predicting fraudulent credit card use, there is a possibility that when a certain cluster only includes data of aaamail, the fact that P_email is aaamail is recognized as a trigger. On the other hand, the machine learning system 11 can determine whether or not, by comparing variability between clusters to check for the presence of clusters with similar trends, the trend is an overall trend of the training data or a local trend (= highly likely to be a trigger).

### <Processing example of counterfeit data addressing processing>

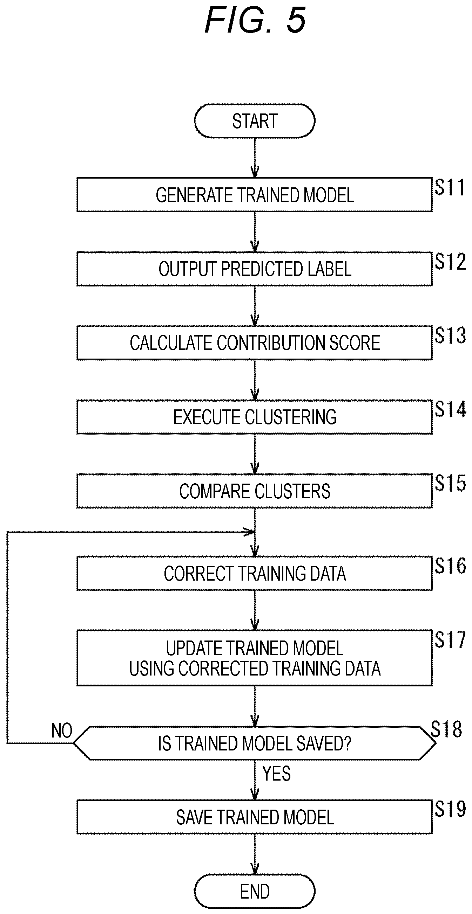

The counterfeit data addressing processing to be executed by the machine learning system 11 will be described with reference to the flowchart illustrated in Fig. 5.

For example, the user specifies a path of training data using the path specification section 71, operates the load button 72 to load the training data from the data input unit 24 into the machine learning device 25, and then operates the analysis button 74 to start the processing.

In step S11, the training execution unit 41 generates a trained model by executing training using the training data read from the data input unit 24 as input to a machine learning algorithm. Then, the training execution unit 41 provides the generated trained model to the model application unit 42.

In step S12, the model application unit 42 applies the training data read from the data input unit 24 to the trained model provided from the training execution unit 41 in step S11. Then, the model application unit 42 acquires a predicted label output as a result of applying the training data to the trained model, and provides the predicted label to the contribution calculation unit 43.

In step S13, the contribution calculation unit 43 calculates a contribution, to the predicted label, of each feature in the training data read from the data input unit 24 using the explainable AI. Then, the contribution calculation unit 43 collectively provides the training data, the predicted label, and the contribution as a single piece of data to the clustering execution unit 44.

In step S14, the clustering execution unit 44 executes clustering to classify each sample of the training data into a plurality of clusters using unsupervised learning with the contribution associated with each feature in the training data as input, and provides the clustering result to the cluster comparison unit 45. Furthermore, the clustering execution unit 44 displays the clustering result in the clustering result display section 75 in Fig. 4.

In step S15, the cluster comparison unit 45 calculates feature variability of each cluster in the clustering result supplied from the clustering execution unit 44 in step S14, and compares the feature variability between the clusters. Then, for example, the cluster comparison unit 45 compares the feature variability between the clusters, and in a case where the comparison result indicates that there is a cluster significantly smaller in feature variability than the other clusters, the cluster is identified as the target cluster. Furthermore, the cluster comparison unit 45 displays the result of comparing the feature variability between the clusters in the cluster comparison result display section 76 in Fig. 4.

In step S16, the data correction unit 46 detects that a sample belonging to the target cluster identified in step S15 is a counterfeit sample, and corrects the training data by addressing (removing or modifying) the counterfeit sample.

In step S17, the data correction unit 46 provides the corrected training data corrected in step S16 to the training execution unit 41. Then, the training execution unit 41 updates the trained model by executing training using the corrected training data as input to the machine learning algorithm.

In step S18, the machine learning device 25 determines whether or not to save the trained model updated in step S17 according to user's operation. For example, the user can execute, in synchronization with the processes of steps S12 to S15, operations using the updated trained model on the basis of the result of comparing the feature variability between the clusters displayed in the cluster comparison result display section 76 in Fig. 4.

That is, when the user determines that counterfeit data remains in the training data as a result of comparing the feature variability between the clusters, the user executes an operation to select samples of the target cluster using the cluster comparison result display section 76. In this case, the machine learning device 25 determines not to save the trained model updated in the previous step S17, the processing returns to step S16, and similar processing is repeated subsequently.

On the other hand, when the user determines that no counterfeit data remains in the training data as a result of comparing the feature variability between the clusters, the user operates the save button 81. In this case, the machine learning device 25 determines to save the trained model updated in the previous step S17, and the processing proceeds to step S19.

In step S19, after the training execution unit 41 finally saves the trained model updated in step S17 to the storage unit 23, the counterfeit data addressing processing is brought to an end.

It is therefore possible for the machine learning system 11 to execute the counterfeit data addressing processing as described above to effectively detect the counterfeit data using a more versatile method and acquire the trained model unaffected by the counterfeit data.

Note that the present technology can be applied to various machine learning systems 11 that acquire training data from an external environment.

### <Configuration example of computer>

Next, the series of processes described above (information processing method) may be executed by hardware or software. In a case where the series of processes is executed by software, a program constituting the software is installed on a general-purpose computer or the like.

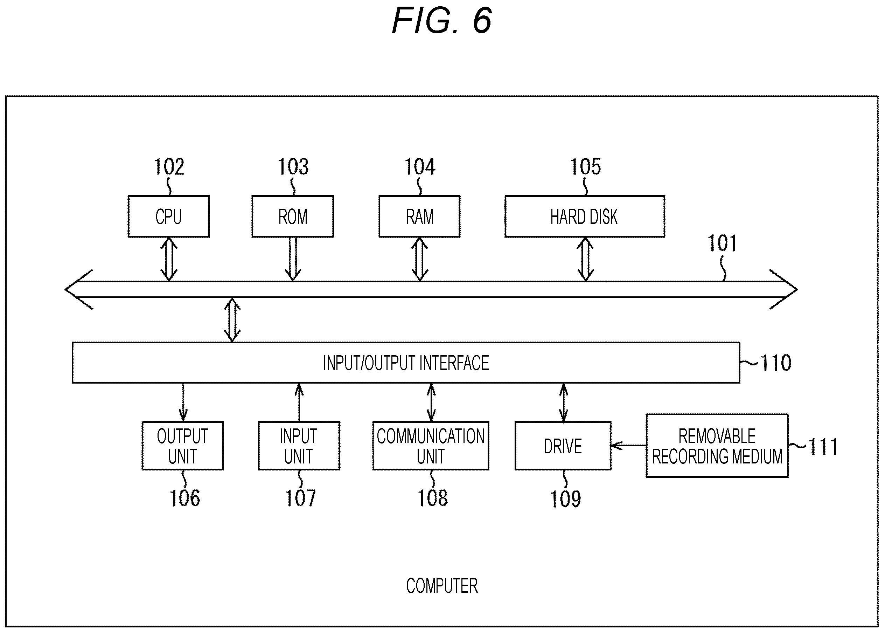

Fig. 6 is a block diagram illustrating a configuration example of an embodiment of the computer on which the program for executing the series of processes described above is installed.

The program can be pre-recorded on a hard disk 105 or a ROM 103 as a recording medium embedded in the computer.

Alternatively, the program can be stored (recorded) on a removable recording medium 111 driven by a drive 109. Such a removable recording medium 111 can be provided as so-called package software. Here, examples of the removable recording medium 111 include, for example, a flexible disk, a compact disc read only memory (CD-ROM), a magneto optical (MO) disk, a digital versatile disc (DVD), a magnetic disk, a semiconductor memory, and the like.

Note that the program can be not only installed on the computer from the removable recording medium 111 as described above but also downloaded to the computer through a communication network or a broadcasting network and installed on the hard disk 105 embedded in the computer. In other words, for example, the program can be wirelessly transferred from a download site to the computer through an artificial satellite for digital satellite broadcasting, or can be transferred by wire to the computer through a network such as a local area network (LAN) and the Internet.

The computer is equipped with a central processing unit (CPU) 102, and an input/output interface 110 is connected to the CPU 102 through a bus 101.

When a command is input by a user operating an input unit 107 through the input/output interface 110 or the like, the CPU 102 executes the program stored in the read only memory (ROM) 103 in accordance with the command. Alternatively, the CPU 102 loads the program stored in the hard disk 105 into a random access memory (RAM) 104 to execute the program.

Therefore, the CPU 102 executes processing according to the above-described flowchart or processing to be executed according to the above configuration described with the block diagram. Then, as necessary, the CPU 102 outputs the processing result from an output unit 106, or transmits the processing result from a communication unit 108, and further causes the hard disk 105 to record the processing result, and the like, through the input/output interface 110, for example.

Note that, the input unit 107 includes a keyboard, a mouse, a microphone, and the like. Furthermore, the output unit 106 includes a liquid crystal display (LCD), a speaker, and the like.

Herein, the processing to be executed by the computer in accordance with the program need not necessarily be executed in the time-series order described as the flowchart. In other words, the processing to be executed by the computer in accordance with the program includes processing to be executed in parallel or independently (e.g., parallel processing or object-oriented processing).

Furthermore, the program may correspond to processing to be executed by a single computer (single processor) or processing to be executed in a distributed manner by a plurality of computers. Moreover, the program may be transferred to a distant computer to be executed.

Moreover, herein, a system means a set of a plurality of components (devices, modules (parts), and the like), and it does not matter whether or not all the components are in the same housing. Therefore, a plurality of devices housed in separate housings and connected to each other through a network and a single device including a plurality of modules housed in a single housing are both systems.

Furthermore, for example, a configuration described as a single device (or processing unit) may be divided into and configured as a plurality of devices (or processing units). Conversely, the configurations described above as a plurality of devices (or processing units) may be collectively configured as a single device (or processing unit). Furthermore, it goes without saying that a configuration other than the above-described configurations may be added to the configuration of each device (or each processing unit). Moreover, as long as the configuration and operation of the entire system are substantially the same, a part of the configuration of a certain device (or processing unit) may be included in the configuration of another device (or another processing unit).

Furthermore, for example, the present technology can be configured as cloud computing in which each function is shared for joint processing by a plurality of devices through a network.

Furthermore, for example, the program described above can be executed by any desired device. In this case, the device is only required to have a necessary function (functional block or the like) and obtain necessary information.

Furthermore, for example, each step of the flowchart described above can be executed by a single device, or can be executed by a plurality of devices in a shared manner. Moreover, in a case where a single step includes a plurality of processes, the plurality of processes included in a single step can be executed by a single device or executed by a plurality of devices in a shared manner. In other words, the plurality of processes included in a single step can also be executed as processes of a plurality of steps. Conversely, the processes described as a plurality of steps can also be collectively executed as a single step.

Note that, in the program to be executed by the computer, the processes of steps for describing the program may be executed in time-series order described herein, or may be executed in parallel, or independently at a necessary timing such as when a call is made. That is, as long as there is no contradiction, the process of each step may be executed in a different order from the above-described order. Moreover, the processes of steps for describing the program may be executed in parallel with processes of another program, or may be executed in combination with processes of the other program.

Note that the plurality of present technologies that has been described herein can each be implemented independently as a single unit as long as there is no contradiction. It goes without saying that it is also possible to implement a combination of a plurality of present technologies as desired. For example, a part or all of the present technologies described in any of the embodiments can be implemented in combination with a part or all of the present technologies described in other embodiments. Furthermore, a part or all of any of the above-described present technologies can be implemented together with another technology that is not described above.

### <Combination example of configuration>

Note that the present technology may also have the following configurations.
(1) An information processing device including:
   a contribution calculation unit that calculates a contribution indicating how much each feature in a training dataset contributes to a predicted label output from a trained model, the training dataset including both a legitimate sample including only legitimate data that does not contain trigger information and a counterfeit sample at least partially including counterfeit data that contains trigger information;
   a clustering execution unit that executes clustering to classify each sample of the training dataset into a plurality of clusters using unsupervised learning with the contribution as input; and
   a cluster comparison unit that compares feature variability between the clusters in a result of the clustering to identify a cluster to which the counterfeit sample included in the training dataset belongs.
(2) The information processing device according to the above (1), in which
   the trained model is used as a fraud detection model that detects fraud.
(3) The information processing device according to the above (1) or (2), further including:
   a training execution unit that generates the trained model by executing training using the training dataset as input to a machine learning algorithm.
(4) The information processing device according to the above (3), further including:
   a model application unit that outputs the predicted label by applying the training dataset to the trained model generated by the training execution unit and provides the predicted label to the contribution calculation unit.
(5) The information processing device according to the above (3) or (4), further including:
   a data correction unit that corrects the training dataset for the counterfeit sample belonging to the cluster identified by the cluster comparison unit.
(6) The information processing device according to the above (5), in which
   the data correction unit removes the counterfeit sample from the training dataset.
(7) The information processing device according to the above (5), in which
   the data correction unit modifies the counterfeit data included in the counterfeit sample.
(8) The information processing device according to any one of the above (5) to (7), in which
   the training execution unit updates the trained model by executing training using the training dataset corrected by the data correction unit as input to the machine learning algorithm.
(9) The information processing device according to any one of the above (3) to (8), in which
   the cluster comparison unit calculates the feature variability of the training dataset for each of the clusters, compares the feature variability between the clusters, and, in a case where one of the clusters is significantly smaller in the feature variability than the other clusters, identifies that the counterfeit sample belongs to the cluster.
(10) The information processing device according to the above (9), further including:
   a display unit that displays a user interface screen, in which
   the user interface screen is provided with a cluster comparison result display section where the result of the comparison between the clusters by the cluster comparison unit is displayed, and
   in the cluster comparison result display section, the cluster identified as containing the counterfeit sample is displayed in an emphasized manner.
(11) The information processing device according to the above (10), in which
   the user interface screen is provided with a selected data display section where data of the counterfeit sample belonging to the cluster selected using the cluster comparison result display section is displayed.
(12) The information processing device according to the above (10) or (11), in which
   the user interface screen is provided with a remove button that is operated to remove the counterfeit sample displayed in the selected data display section.
(13) The information processing device according to the above (11) or (12), in which
   the user interface screen is provided with a modify button that is operated to modify the counterfeit sample displayed in the selected data display section, and a selected data modify section where the counterfeit sample to be corrected is modified in response to operation of the modify button.
(14) An information processing method including:
   causing an information processing device to calculate a contribution indicating how much each feature in a training dataset contributes to a predicted label output from a trained model, the training dataset including both a legitimate sample including only legitimate data that does not contain trigger information and a counterfeit sample at least partially including counterfeit data that contains trigger information;
   causing the information processing device to execute clustering to classify each sample of the training dataset into a plurality of clusters using unsupervised learning with the contribution as input; and
   causing the information processing device to compare feature variability between the clusters in a result of the clustering to identify a cluster to which the counterfeit sample included in the training dataset belongs.
(15) A program causing a computer of an information processing device to execute information processing, the information processing including:
   calculating a contribution indicating how much each feature in a training dataset contributes to a predicted label output from a trained model, the training dataset including both a legitimate sample including only legitimate data that does not contain trigger information and a counterfeit sample at least partially including counterfeit data that contains trigger information;
   executing clustering to classify each sample of the training dataset into a plurality of clusters using unsupervised learning with the contribution as input; and
   comparing feature variability between the clusters in a result of the clustering to identify a cluster to which the counterfeit sample included in the training dataset belongs.

Note that the present embodiment is not limited to the embodiments described above, and various modifications can be made without departing from the gist of the present disclosure. Furthermore, the effects described herein are merely examples and are not restrictive, and there may be other effects.

### REFERENCE SIGNS LIST

- 11: Machine learning system
- 21: Operation input unit
- 22: Display unit
- 23: Storage unit
- 24: Data input unit
- 25: Machine learning device
- 41: Training execution unit
- 42: Model application unit
- 43: Contribution calculation unit
- 44: Clustering execution unit
- 45: Cluster comparison unit
- 46: Data correction unit
- 51: Legitimate data storage unit
- 52: Counterfeit data storage unit
- 53: Training data storage unit

## Claims

1. An information processing device comprising:
a contribution calculation unit that calculates a contribution indicating how much each feature in a training dataset contributes to a predicted label output from a trained model, the training dataset including both a legitimate sample including only legitimate data that does not contain trigger information and a counterfeit sample at least partially including counterfeit data that contains trigger information;
a clustering execution unit that executes clustering to classify each sample of the training dataset into a plurality of clusters using unsupervised learning with the contribution as input; and
a cluster comparison unit that compares feature variability between the clusters in a result of the clustering to identify a cluster to which the counterfeit sample included in the training dataset belongs.

2. The information processing device according to claim 1, wherein
the trained model is used as a fraud detection model that detects fraud.

3. The information processing device according to claim 1, further comprising:
a training execution unit that generates the trained model by executing training using the training dataset as input to a machine learning algorithm.

4. The information processing device according to claim 3, further comprising:
a model application unit that outputs the predicted label by applying the training dataset to the trained model generated by the training execution unit and provides the predicted label to the contribution calculation unit.

5. The information processing device according to claim 3, further comprising:
a data correction unit that corrects the training dataset for the counterfeit sample belonging to the cluster identified by the cluster comparison unit.

6. The information processing device according to claim 5, wherein
the data correction unit removes the counterfeit sample from the training dataset.

7. The information processing device according to claim 5, wherein
the data correction unit modifies the counterfeit data included in the counterfeit sample.

8. The information processing device according to claim 5, wherein
the training execution unit updates the trained model by executing training using the training dataset corrected by the data correction unit as input to the machine learning algorithm.

9. The information processing device according to claim 3, wherein
the cluster comparison unit calculates the feature variability of the training dataset for each of the clusters, compares the feature variability between the clusters, and, in a case where one of the clusters is significantly smaller in the feature variability than the other clusters, identifies that the counterfeit sample belongs to the cluster.

10. The information processing device according to claim 9, further comprising:
a display unit that displays a user interface screen, wherein
the user interface screen is provided with a cluster comparison result display section where the result of the comparison between the clusters by the cluster comparison unit is displayed, and
in the cluster comparison result display section, the cluster identified as containing the counterfeit sample is displayed in an emphasized manner.

11. The information processing device according to claim 10, wherein
the user interface screen is provided with a selected data display section where data of the counterfeit sample belonging to the cluster selected using the cluster comparison result display section is displayed.

12. The information processing device according to claim 11, wherein
the user interface screen is provided with a remove button that is operated to remove the counterfeit sample displayed in the selected data display section.

13. The information processing device according to claim 11, wherein
the user interface screen is provided with a modify button that is operated to modify the counterfeit sample displayed in the selected data display section, and a selected data modify section where the counterfeit sample to be corrected is modified in response to operation of the modify button.

14. An information processing method comprising:
causing an information processing device to calculate a contribution indicating how much each feature in a training dataset contributes to a predicted label output from a trained model, the training dataset including both a legitimate sample including only legitimate data that does not contain trigger information and a counterfeit sample at least partially including counterfeit data that contains trigger information;
causing the information processing device to execute clustering to classify each sample of the training dataset into a plurality of clusters using unsupervised learning with the contribution as input; and
causing the information processing device to compare feature variability between the clusters in a result of the clustering to identify a cluster to which the counterfeit sample included in the training dataset belongs.

15. A program causing a computer of an information processing device to execute information processing, the information processing comprising:
calculating a contribution indicating how much each feature in a training dataset contributes to a predicted label output from a trained model, the training dataset including both a legitimate sample including only legitimate data that does not contain trigger information and a counterfeit sample at least partially including counterfeit data that contains trigger information;
executing clustering to classify each sample of the training dataset into a plurality of clusters using unsupervised learning with the contribution as input; and
comparing feature variability between the clusters in a result of the clustering to identify a cluster to which the counterfeit sample included in the training dataset belongs.
